# EUROPEAN PATENT SPECIFICATION

(11) **EP 0 424 096 B1**
(45) Date of publication and mention of the grant of the patent: **18.09.1996**
(21) Application number: 90311326.4
(22) Date of filing: 16.10.1990
(51) Int. Cl.: G06K 7/10, G02B 26/10

(54) **Bar code readers**
Balkencodeleser
Lecteur de code à batônnets

(30) Priority: 16.10.1989 JP 268414/89; 16.10.1989 JP 268412/89; 16.10.1989 JP 268415/89; 16.10.1989 JP 268417/89; 16.10.1989 JP 268411/89; 16.10.1989 JP 268413/89; 16.10.1989 JP 268422/89
(43) Date of publication of application: 24.04.1991
(73) Proprietor: FUJITSU LIMITED, Kawasaki-shi, Kanagawa 211 (JP)
(72) Inventor: Katoh, Hiroaki, Sagamihara-shi, Kanagawa 229 (JP); Murakawa, Yoshitaka, Fuchu-shi, Tokyo 183 (JP); Miyazaki, Toshimasa, Yamato-shi, Kanagawa 242 (JP); Kitamura, Nobuyuki, Hironodai, Zama-shi, Kanagawa 228 (JP); Takahashi, Tamotsu, Shiki-shi, Saitama 353 (JP); Ishii, Takeshi, Ichikawa-shi, Chiba 272-01 (JP); Oyama, Yoshihiro, Koriyama-shi, Fukushima 963 (JP); Sasaki, Tatsuo, Tokyo 114 (JP); Sato, Shinichi, Kawasaki-shi, Kanagawa 211 (JP); Moriya, Kazumasa, Urawa-shi, Saitama 338 (JP)
(74) Representative: Fane, Christopher Robin King

(56) References cited:
- EP-A- 0 260 155
- EP-A- 0 263 696
- EP-A- 0 394 072
- WO-A-89/06787
- GB-A- 2 198 858
- US-A- 4 662 709
- US-A- 4 795 224

## Description

The present invention relates to a bar code reader and a bar code detecting system employing the same.

Recently, bar code readers are widely utilized for management of goods in POS (Point of Sales) systems. In general, there are two types of bar code reader, i.e., an installed type and a handheld type. The former is installed, for example, within a sales counter in a shop or store. This type has a plurality of scanning beams which are irradiated onto the bar code symbol so that it has highly precise detection of the bar code regardless of the entry direction of goods. In general, however, this type of bar code reader is very large and occupies a large amount of space in the counter.

A smaller handheld type of bar code reader has been proposed for use in relatively small stores. This proposed reader has only one scanning beam to be irradiated onto the bar code symbol, however, so that an operator must handle the goods to locate the bar code.

Accordingly, a compact type bar code reader which can be installed, for example, in a counter, and having the same performance as the large type is desired in for use in POS systems.

EP-A-0 260 155 discloses a bar code reader according to the preamble of accompanying claim 1. The bar code reader is given a shallow height by positioning all its component parts at approximately the same height within the casing.

EP-A-0 263 696 by the present applicant discloses a laser beam scanner employing a holographic disk. By providing holographic strips on a scanning window, the height of the scanner is reduced.

EP-A-0 394 072 by the present applicant constitutes prior art for this application only under Article 54(3) EPC. It discloses a V-shape polygon mirror and an optical scanning apparatus employing the same.

According to the present invention, there is provided a compact type bar code reader for detecting a bar code symbol provided on a surface of an article, comprising:
laser beam generation means for generating an outgoing laser beam to be irradiated onto the bar code symbol;
focus means for focusing the outgoing beam;
a polygonal mirror for forming various scanning patterns of the outgoing beam;
a reflector means for reflecting the outgoing beam to, and an incoming beam from, the bar code symbol;
light collection means for collecting the incoming beam reflected from the reflector means;
light reception means for receiving the collected incoming beam and converting it to an electric signal; and
a casing for housing all of the above means, an upper half of the casing having a reading window for transmitting the outgoing and incoming beams, and a lower half of the casing including the laser beam generation means, focus means, light collection means and light reception means;
wherein a light path of the outgoing beam is longer than that of the incoming beam, and the outgoing light path is uninterrupted by the light collection means;
characterised by V-shape reflecting means, constituted by an upper reflection unit, provided by the polygon mirror, and by a lower reflection unit, the upper and lower reflection units being positioned in the upper and lower halves of the casing respectively, and being mutually arranged in a V-shape for transferring the outgoing and incoming beams between the lower and upper halves of the casing.

The lower reflection unit may be a fixed reflection mirror, separate from the polygonal mirror of the upper reflection unit.

Alternatively, the V-shape reflecting means may be constituted in the form of a V-shape polygonal mirror providing both the upper and lower reflection units. In this case, preferably, the lower reflection unit and the upper reflection unit comprise a plurality of reflection surfaces, each of the upper reflection surfaces and lower reflection surfaces being intersected so as to form a V-shape having an intersection angle, and inclined between the upper reflection surfaces and the lower reflection surfaces so as to form an inclination angle.

Preferably also, the reflector means comprises a multi-face reflection mirror constituted by at least two reflection mirrors to form various directions of the scanning pattern.

In another embodiment, the compact type bar code reader further comprises at least two light emission elements and a light reception element, these elements being provided in the casing and arranged in such a way that an article detection area defined by these elements overlaps a bar code symbol readable area defined by the scanning laser beam.

The light emission elements are preferably arranged in such a way that light emission areas between these elements are overlapped with each other.

The present invention also embraces a bar code detecting system comprising the above bar code reader, in the form of a scanning read unit, and further comprising an article detection unit for generating a detection light beam for irradiation onto the article, and receiving the detection light beam reflected from the article; and a control unit for generating an emission stop signal to the detection unit, receiving an article detection signal from the detection unit, and generating a scanning start/stop signal to be sent to the scanning read unit.

The control unit controls the operation of these units in such a way that, first, the detection light beam is emitted to the article, second, the outgoing laser beam is started after the article detection signal is received, third, the detection light beam is stopped during irradiation of the outgoing laser beam, fourth, the outgoing laser beam is stopped when the read operation is completed, and finally, the detection light beam is again emitted to detect a next article.

In such a system, the scanning read unit (bar code reader) may further comprise a demodulation circuit for demodulating the reflected laser beam.

The article detection unit may comprise a light emission element, a light reception element, a light change detection circuit for detecting the change of the amount of received light, and a clock pulse generation circuit for generating clock pulse to obtain a pulsed detection light beam.

The control unit may comprise a central processing unit for controlling the operation of the units, and a read time control timer for timing the irradiation time of the outgoing laser beam.

In another embodiment, the V-shape polygonal mirror is manufactured in such a way that the V-shape polygonal mirror is divided into the upper reflection unit and the lower reflection unit, each surface of the upper and lower unit is separately coated by a metal film evaporated from an evaporation source, and the upper and lower units are assembled to each other after evaporation of the metal film.

Preferably, the upper and lower reflection units are divided along a horizontal separation line.

In still another embodiment, the V-shape polygonal mirror further comprises a polygon motor to rotate the V-shape polygonal mirror. The polygon motor is constituted by a rotation axle, a rotor fixed to the rotation axle, a stator, and a bearing mounted between the rotation axle and the stator. The rotor is mounted over the stator, and the upper and lower reflection units are mounted over the rotor.

Preferably, in this construction, the assembly of the V-shape polygonal mirror and the polygon motor is performed in such a way that first, the rotation axle is mounted to the stator through the bearing; second, the rotor is mounted to the rotation axle by a screw; third, the lower reflection unit is mounted onto the stator; fourth, the upper reflection unit is mounted onto the lower unit through a coupling hold and a projection; and finally, a flat spring is mounted to the rotation axle by the screw, and at the same time, a rubber spacer is provided between the upper unit and the flat spring.

Reference will now be made by way of example to the accompanying drawings, in which:
Fig. 1 is a schematic sectional view of a previously-considered compact type bar code reader;
Figs. 2A to 2C are views for explaining operation of the Fig. 1 reader;
Fig. 3 is a schematic sectional side view of a compact type bar code reader according to an embodiment of the present invention;
Fig. 4 is a sectional plan view of the Fig. 3 reader;
Figs. 5A to 5C are views for explaining scanning patterns formed by the Figure 3 reader;
Fig. 6 is a schematic perspective view showing the arrangement of components in a bar code reader according to another embodiment of the present invention;
Figs. 7A to 7C, and Figs. 8A to 8C are views for explaining scanning patterns formed by a multi-face reflection mirror in the Figure 6 reader;
Fig. 9 is a schematic sectional view of a compact type bar code reader according to another embodiment of the present invention;
Fig. 10 is a schematic plan view of the Fig. 9 reader;
Fig. 11 is an enlarged perspective view of a V-shape polygonal mirror in the Fig. 9 reader;
Figs. 12A and 12B are views for explaining angles between an upper surface and a lower surface of the mirror shown in Fig. 11;
of the mirror shown in Fig. 11;
Figs. 13A to 13C are views for explaining change of the scanning pattern based on the intersection and inclination angles;
Fig. 14 is a schematic perspective view of a working arrangement including a bar code reader embodying the present invention;
Fig. 15 is a schematic sectional view of a compact type bar code reader according to still another embodiment of the present invention;
Figs. 16A to 16C are views for explaining an article detection method employing the Fig. 15 reader;
Figs. 17A to 17C are views for explaining a previously considered article detection method;
Fig. 18 is a schematic front elevational view of the bar code reader shown in Fig. 15;
Fig. 19 is a schematic sectional side view of the Fig. 15 reader, for illustrating operation thereof;
Fig. 20 is a view corresponding to Fig. 19 for explaining another example of the operation of the Fig. 15 reader;
Fig. 21 is a basic block diagram of circuitry of a bar code reader embodying the invention;
Fig. 22 is a detail block diagram of the circuitry shown in Fig. 21;
Fig. 23 is a signal timing chart of the circuitry shown in Fig. 22;
Fig. 24 is a flowchart illustrating operation of a control unit of the Fig. 21 circuitry;
Fig. 25A and 25B are views for explaining the manufacturing process of the V-shaped polygonal mirror according to an embodiment of the present invention;
Figs. 26A and 26B show an upper reflection unit of the mirror manufactured by the Fig. 25 process;
Figs. 27A and 27B show a lower reflection unit of the same mirror;
Figs. 28A and 28B are views for explaining a method of division between the upper unit and the lower unit;
Fig. 29 is a view for explaining an evaporation process used in the Fig. 25 manufacturing process;
Fig. 30 is a sectional view after assembly of the V-shape polygonal mirror and its associated polygon motor;
Fig. 31 is a schematic perspective view of the V-shape polygonal mirror; and
Fig. 32 is a view corresponding to Fig. 28, for explaining another example of a division method.

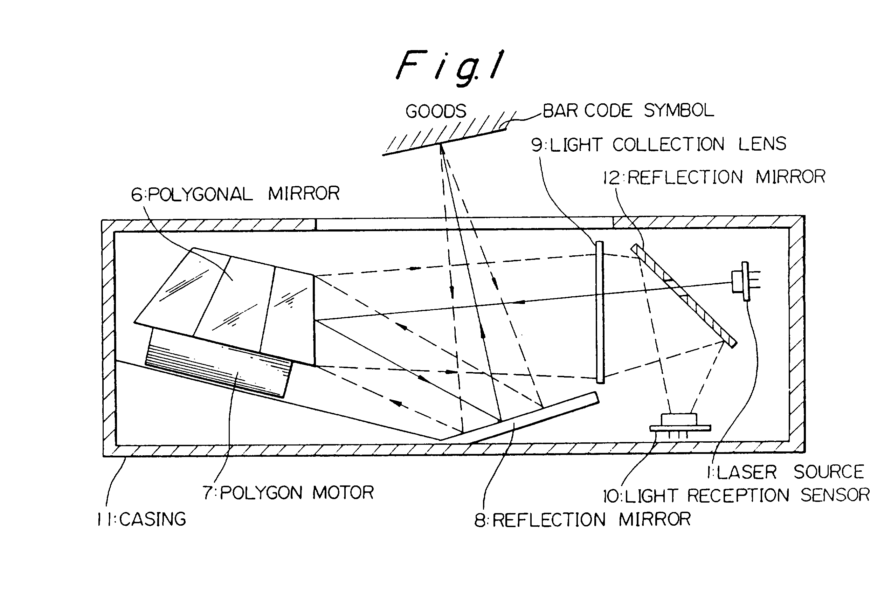

Figure 1 is a schematic sectional view of a previously considered compact type bar code reader. In Fig. 1, reference number 1 denotes a semiconductor laser beam generation source, 6 a polygonal mirror as scanning pattern forming means, 7 a polygon motor, 8 a reflection mirror, 9 a light collection lens, 10 a light reception sensor, 11 a casing, and 12 a reflection mirror.

The polygonal mirror 6 is rotated by the polygon motor 7 to form various scanning patterns. The laser beam emitted from the laser source 1 is reflected by the polygonal mirror 6, reflected by the reflection mirror 8, and then irradiated onto the bar code symbol.

The laser beam reflected from the bar code symbol is reflected by the reflection mirror 8, reflected by the polygonal mirror 6, collected by the light collection lens 9, again reflected by the reflection mirror 12, and then received by the light reception sensor 10. The received light is then converted to an electrical signal.

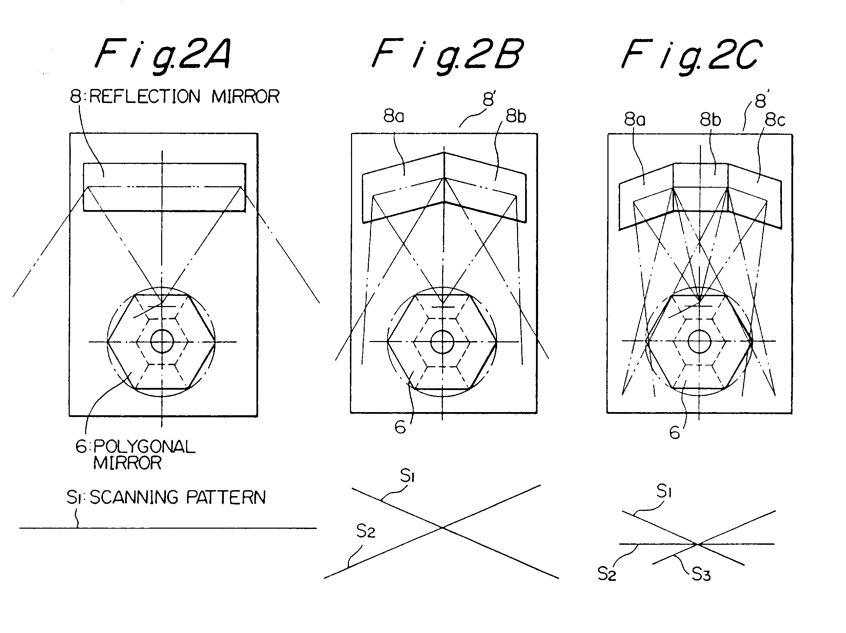

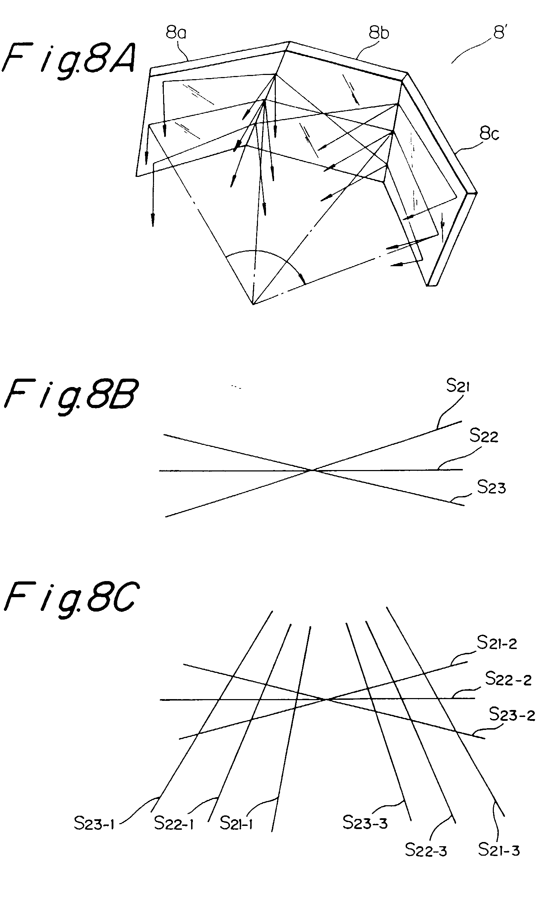

Figures 2A to 2C are views for explaining the relationship between a scanning pattern and reflection mirror. In Figs. 2A to 2C, 8a to 8c denote reflection mirrors, and S1 to s3 denote scanning patterns. In Fig. 2A, only one reflection mirror 8 is provided so that the scanning pattern is in one direction. In Fig. 2B, two reflection mirrors are provided so that the scanning pattern is in two directions. In Fig. 2C, three reflection mirrors are provided so that the scanning pattern is in three directions. Accordingly, the number of scanning pattern directions depends on number of reflection mirrors.

Problems in the bar code reader shown in Figs. 1 and 2A to 2C will be explained below.

In general, it is necessary to provide a light path distance between the polygonal mirror 6 and the bar code symbol a great as possible to ensure that the scanning patterns each have sufficient length. Accordingly, the distance between the polygonal mirror 6 and the reflection mirror 8 must be made as large as possible to satisfy the above requirement as shown in Fig. 1. As a result, the size of the bar code reader becomes large to ensure sufficient distance of the light path.

Further, the size of the light collection lens 9 becomes large because it must be provided at the location where it does not interrupt the light path of the scanning laser beam. As a result, the overall size of the bar code reader also becomes large thus limiting its location.

As may be seen from the drawing, both the distances of an emitted light path (from the laser beam source to the bar code symbol) and a reflected light path (from the bar code symbol to the light reception element) are large in the Figure 1 reader. Ideally, the scanning beam path length should be large and the reflected light path, more particularly the reflected light path from the polygonal mirror 6 to the light collection lens 9 should be short.

Still further, in general, it is necessary to provide as many scanning pattern directions (i.e., a number of directions of the scanning pattern) as possible to improve the precision of the detection of the bar code symbol. as explained in Figs. 2A to 2C, since number of the scanning pattern directions depends on number of reflection mirrors, it is necessary to provide as many reflection mirrors as possible. However, as shown in Figs. 2B and 2C, the greater the number of reflection mirrors, the shorter the length of the scanning pattern. As explained above, an adequately long scanning pattern is necessary to ensure precise detection of the bar code symbol. Accordingly, it is necessary to provide larger mirrors to ensure sufficient length of the scanning pattern. As a result, the overall size of the bar code reader also increases.

A compact type bar code reader embodying the present invention is explained in detail hereinafter.

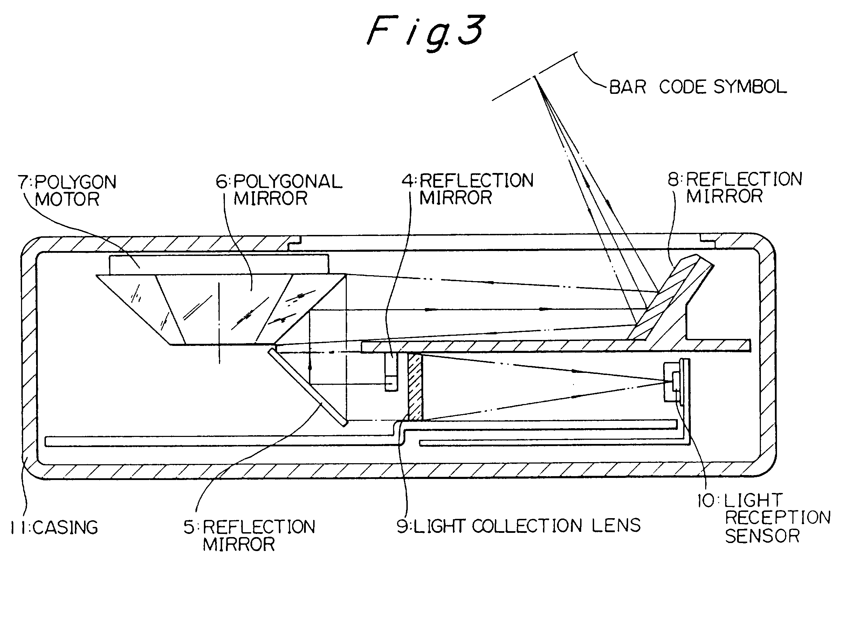

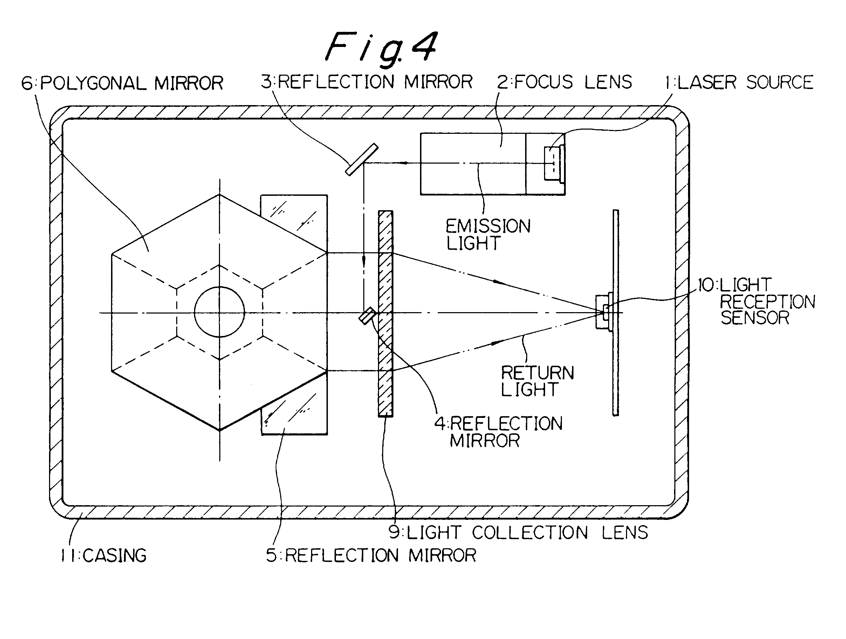

Figure 3 is a sectional side view of a bar code reader according to an embodiment of the present invention. Fig. 4 is a sectional plan view corresponding to Fig. 3. In Figs. 3 and 4, the same reference numbers as used in Fig. 1 are attached to the same components in these drawings. In Fig. 3, reference numbers 4 and 5 denote reflection mirrors. In Fig. 4, reference number 2 denotes a focus lens for focusing the laser beam, and 3 denotes a reflection mirror.

As shown in Figs. 3 and 4, the laser source 1, the focus lens 2, the reflection mirrors 3 to 5, the light collection lens 9, and light reception sensor 10 are arranged at the lower portion of the casing 11, while the polygonal mirror 6 and the reflection mirror 8 are arranged at the upper portion of the casing 11. Accordingly, the laser beam from the source 1 is reflected by the reflection mirrors 3, 4, and 5, and further reflected by the polygonal mirror 6 and the reflection mirror 8 , and then irradiated onto the bar code symbol. The laser beam reflected from the bar code symbol is reflected by the reflection mirror 8, the polygonal mirror 6 and the reflection mirror 5, and then collected by the light collection lens 9, and received by the light reception sensor 10. Accordingly, the reflection mirror 5 is used for forming the light path between the upper portion and the lower portion of the bar code reader.

Based on the above arrangement of the components, it is possible to ensure a long emitted light path and a short reflected light path. Further, it is possible to provide a light collection lens 9 which is small in size because it can be close to the mirror 5 without interrupting the scanning beam. As a result, it is possible to produce a compact type bar code reader based on the above arrangement of each element.

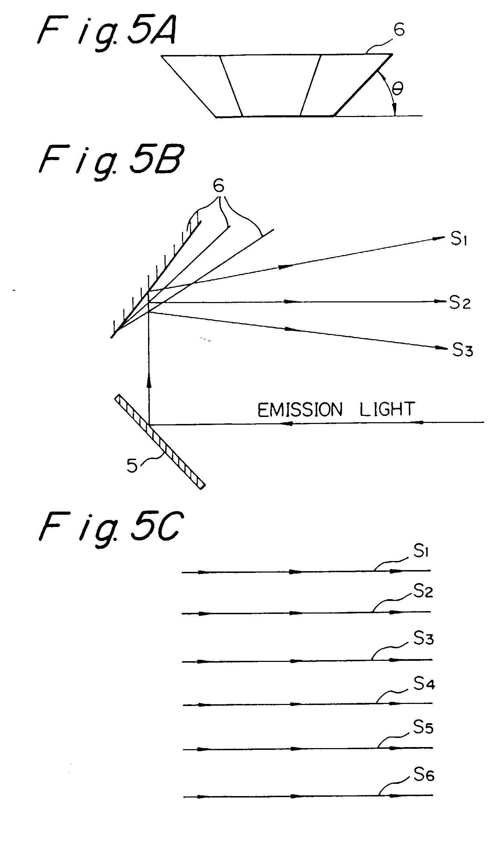

Figures 5A to 5C are views for explaining scanning patterns. In Fig. 5A, the polygonal mirror 6 has six reflective surfaces each having a different angle ϑ so that six different reflection angles are formed as shown in Fig. 5B. Accordingly, it is possible to provide six kinds of parallel scanning patterns as shown in Fig. 5C.

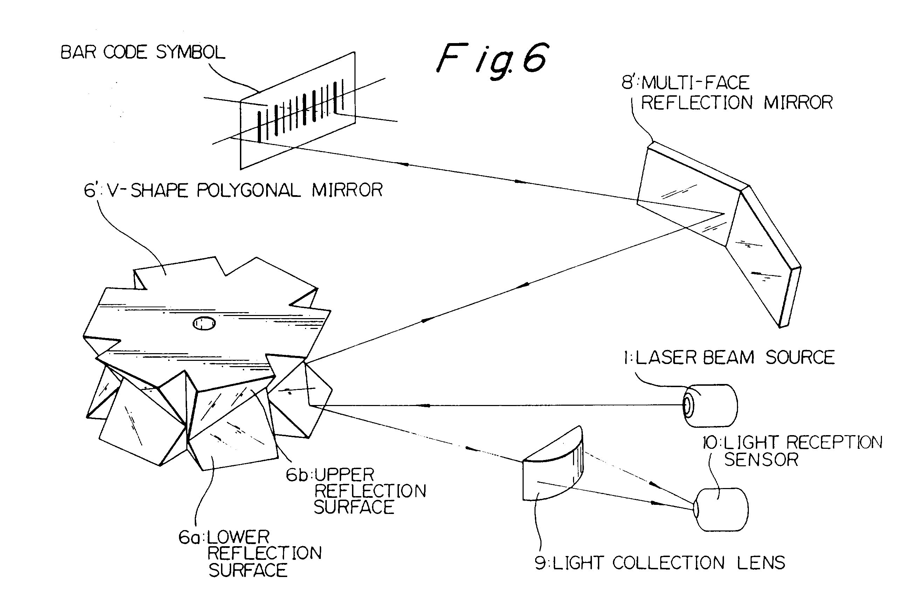

Figure 6 is a basic structural view of a compact type bar code reader according to another embodiment of the present invention. In Fig. 6, reference number 6′ denotes a V-shape polygonal mirror having a lower reflection surface 6a and an upper reflection surface 6b, and 8′ denotes a multi-face reflection mirror having at lest two reflection mirrors. The laser beam from the beam source 1 is reflected by the lower reflection surface 6a, reflected by the upper reflection surface 6b, and reflected by the multi-face reflection mirror 8′ and then irradiated onto the bar code symbol. The laser beam reflected from the bar code symbol is reflected by the multi-face reflection mirror 8′, reflected by the upper reflection surface 6b, reflected by the lower reflection surface 6a, and then collected by the light collection lens 9, and finally received by the light reception sensor 10.

In this embodiment, although an explanation will be given in detail below, briefly, the V-shape polgyonal mirror 6′ is used instead of the polygonal mirror 6 and the reflection mirror 5 shown in Fig. 3, and multi-face reflection mirror 8′ is used instead of the reflection mirror 8.

As a result, it is possible to obtain a plurality of scanning patterns having various directions by using the V-shape polygonal mirror 6′. In this case, the number of directions corresponds to the number of faces of the V-shape polygonal mirror 6′. Further, it is possible to obtain a plurality of scanning patterns by using the multi-face reflection mirror 8′. Accordingly, it is possible to obtain many kinds of scanning patterns by using a set comprised of the V-shape polygonal mirror 6′ and the multi-face reflection mirror 8′.

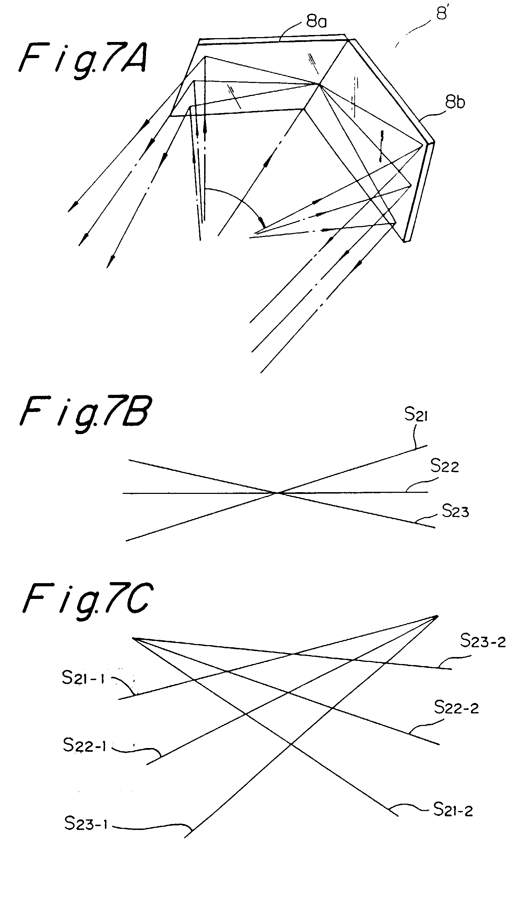

Figures 7A to 7C, and 8A to 8C are views for explaining scanning patterns formed by multi-face reflection mirror 8′. In Fig. 7A, the multi-face reflection mirror 8′ is constituted by two mirrors 8a and 8b.

In Fig. 7B, the scanning patterns S21 to S23 are obtained by the V-shape polygonal mirror 6′. To obtain these three kinds of scanning patterns, it is necessary to provide three kinds of faces, each having different angles. In this embodiment, three sets of faces, each set having the same angles, are provided in the V-shape polygonal mirror 6′. Accordingly, the scanning patterns as shown in Fig. 7B are generated twice per one rotation of the V-shape polygonal mirror 6′.

As shown in Fig. 7C, each scanning pattern S21 to S23 is divided into two scanning patterns S21-1 and S21-2, S22-1 and S22-2, and S23-1 and S23-2. As a result, the scanning patterns (six scanning patterns) as shown in Fig. 7B are generated twice per one rotation of the V-shape polygonal mirror 6′.

In Fig. 8A, the multi-face reflection mirror 8′ is constituted by three mirrors 8a, 8b and 8c. The scanning patterns shown in Fig. 8B correspond to the scanning patterns shown in Fig. 7B. As shown in Fig. 8C, nine scanning patterns S21-1 to S23-3 are obtained in the case of three reflection mirrors 8a to 8c. In the above embodiments, although the V-shape polygonal mirror 6′ has six faces, and the multi-face reflection mirror 8′ has two or three mirrors, it is possible to provide the V-shape polygonal mirror 6′ having more faces and the multi-face reflection mirror 8′ having more reflection mirrors.

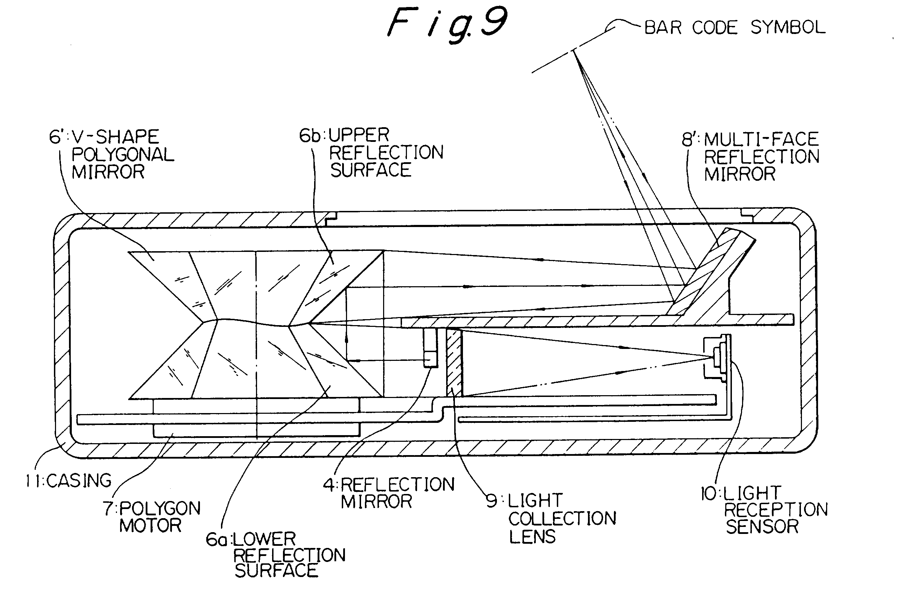

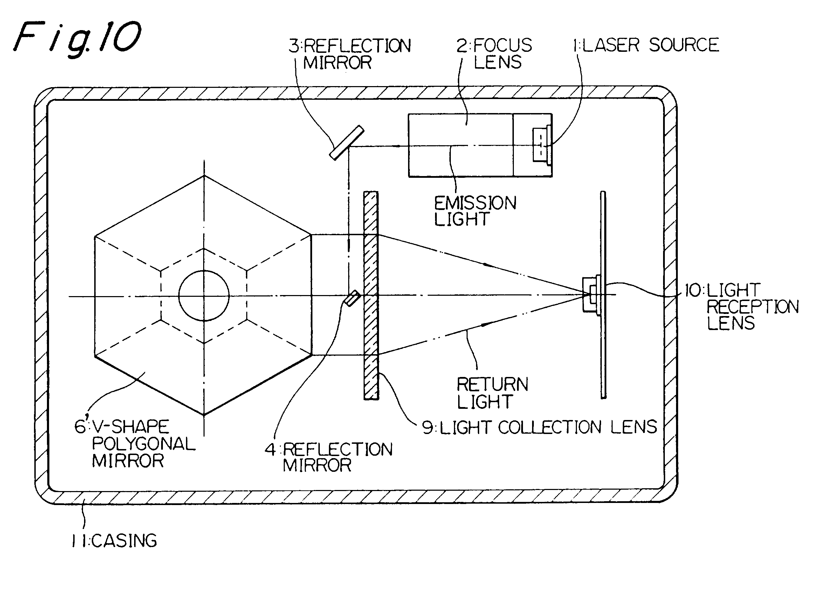

Figure 9 is a schematic sectional view of a bar code reader according to another embodiment of the present invention, and Figure 10 is an upper view of Fig. 9. The structure of Fig. 9 shows the concrete structure of the bar code reader shown in Fig. 6. As is obvious from the drawings, the polygonal mirror 6 and the reflection mirror 5 shown in Fig. 3 are replaced by the V-shape polygonal mirror 6′. Further, the reflection mirror 8 shown in Fig. 3 is replaced by the multi-face polygonal mirror 8′. In this case, the reflection mirror 8 can also be used in this embodiment.

The laser beam from the source 1 is reflected by the reflection mirrors 3 and 4, reflected by the lower reflection surface 6a and the upper reflection surface 6b of the V-shape polygonal mirror 6′, further reflected by the multi-face reflection mirror 8′, and then irradiated onto the bar code symbol. The laser beam reflected from the bar code symbol is reflected by the reflection mirror 8′, reflected by the upper reflection mirror 6b and the lower reflection mirror 6a, collected by the light collection lens 9, and then received by the light reception sensor 10. Accordingly, the lower reflection mirror 6a is used for forming the light path between the upper portion and the lower portion.

Based on the above arrangement of each component, it is possible to ensure a long emitted light path and a short reflected light path. Further, it is possible to provide a small size light collection lens 9. As a result, it is possible to produce a compact type bar code reader with a plurality of scanning patterns having various directions.

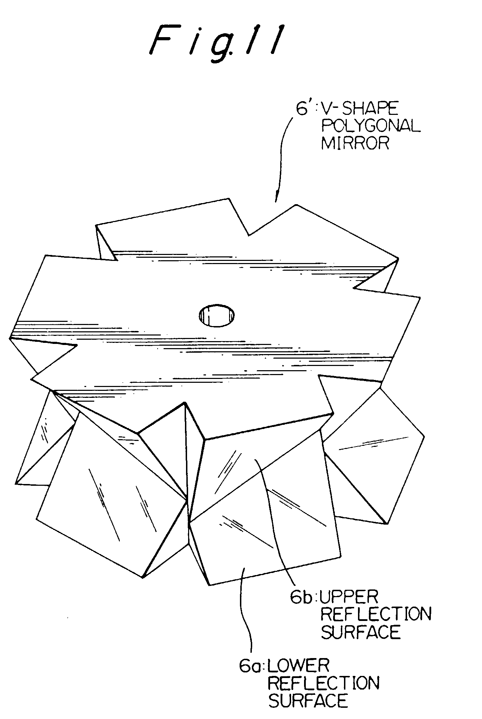

Figure 11 is an enlarged perspective view of the V-shape polygonal mirror. As previously explained, reference number 6' denotes the V-shape polygonal mirror, 6a denotes the lower reflection surface, and 6b denotes the upper reflection surface.

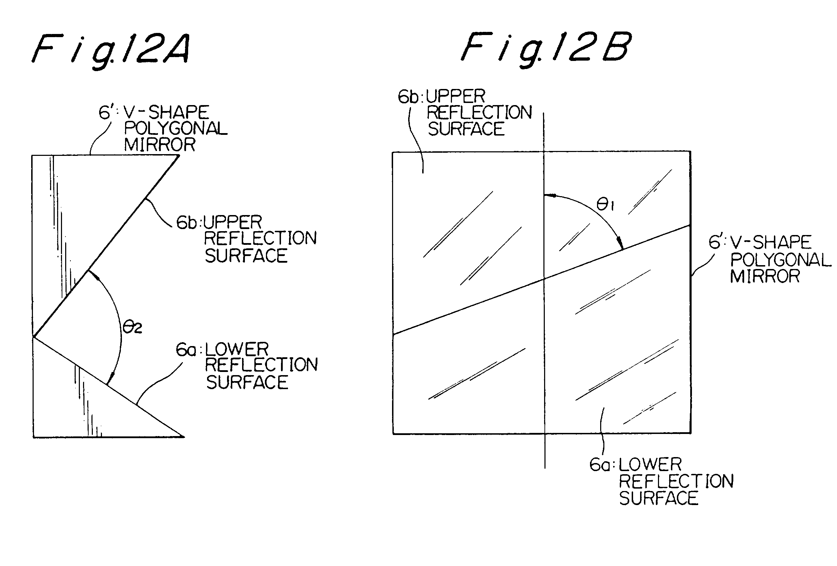

Figures 12A and 12B are views for explaining angles between the upper surface and the lower surface. In Fig. 12A, the intersection angle between the lower surface 6a and the upper surface 6b is shown by θ₂. In Fig. 12B, the inclination angle between the lower surface 6a and the upper surface 6b is shown by θ₁. The scanning pattern can be changed in accordance with the angles θ₁ and θ₂ as explained in detail below.

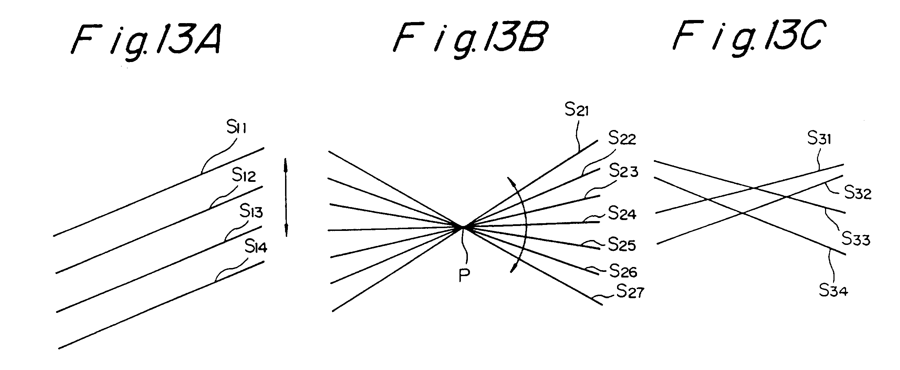

Figures 13A to 13C are views for explaining a change of scanning pattern based on the angles θ₁ and θ₂. In Fig. 13A, when the intersection angle θ₂ is changed, the position of the scanning pattern is shifted in parallel as shown by S11 to S14. In Fig. 13B, when the inclination angle θ₁ is changed, the inclination (direction) of the scanning pattern is changed around the center P as shown by S21 to S27. The scanning patterns S31 to S34 shown in Fig. 13C are in the case of the change of the angles θ₁ and θ₂. As shown in Fig. 13C, many kinds of the scanning patterns having various directions can be obtained based on the change of the angles θ₁ and θ₂.

Accordingly, in the V-shape polygonal mirror 6' shown in Fig. 11, it is possible to provide six kinds of intersection angles and six kinds of inclination angles so that many kinds of scanning patterns can be obtained even in a compact bar code reader.

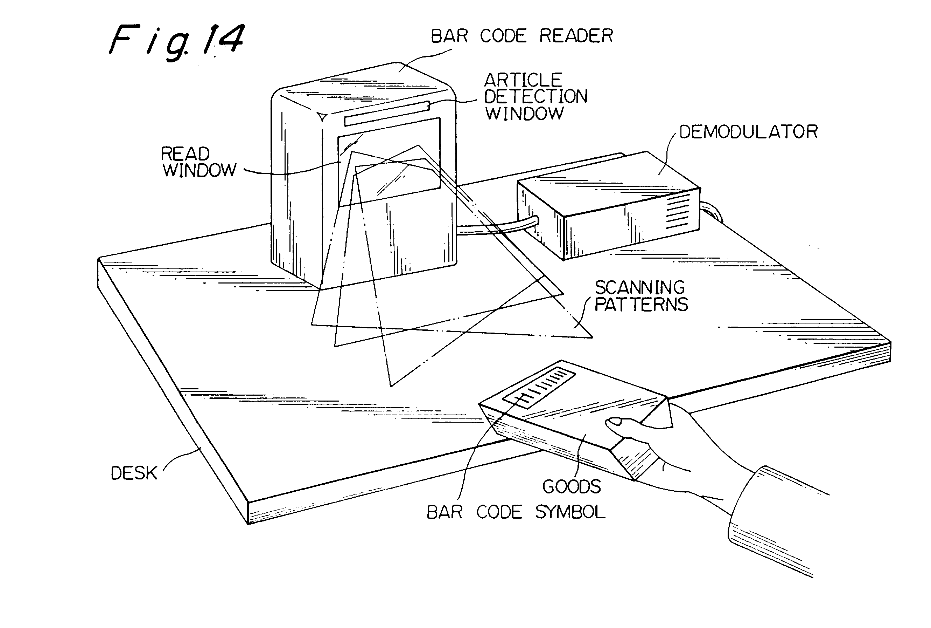

Figure 14 is a schematic view of a working arrangement employing a bar code reader embodying the present invention. Since such a bar code reader can be very small, it can be very easily be put on a desk or counter in a small store. As seen in Fig. 14, a demodulator is also connected to the bar code reader, and when the bar code symbol on goods is exposed by hand to the scanning patterns, the bar code is easily detected since many kinds of the scanning patterns are generated from the read window.

Regarding an article detection window in the bar code reader, an explanation is given in detail hereinafter.

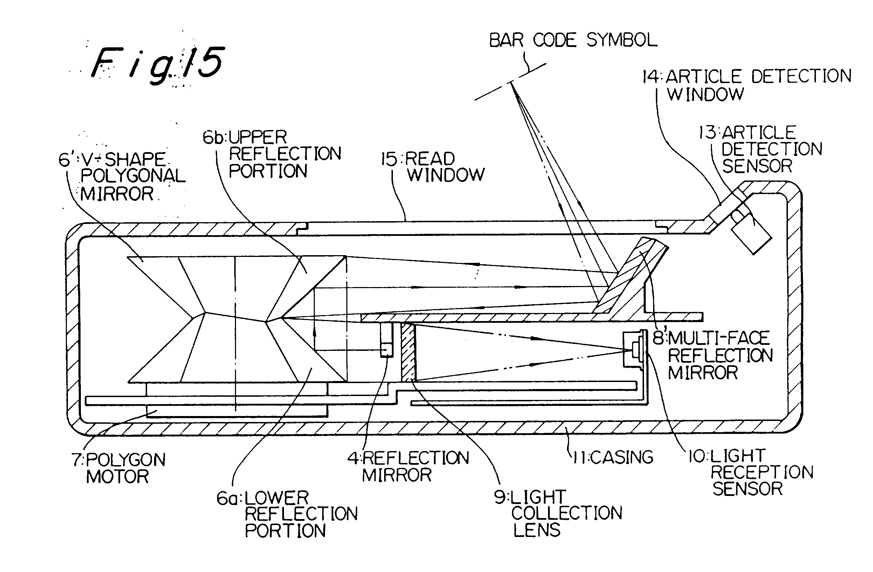

Figure 15 is a schematic sectional view of a compact type bar code reader according to still another embodiment of the present invention. In Fig. 15, 13 denotes an article detection sensor for detecting the article (goods), 14 denotes the article detection window for the light path, and reference number 15 denotes the read window for the light path of the laser beam. Other components are the same as those of Fig. 9. In this embodiment, the article detection sensor 13 is provided to quickly and exactly detect the position of the goods before the bar code symbol is detected as explained below. It is thus possible to extend the life of the laser source since the irradiation of the laser beam is started after the article detection sensor 13 detects the goods.

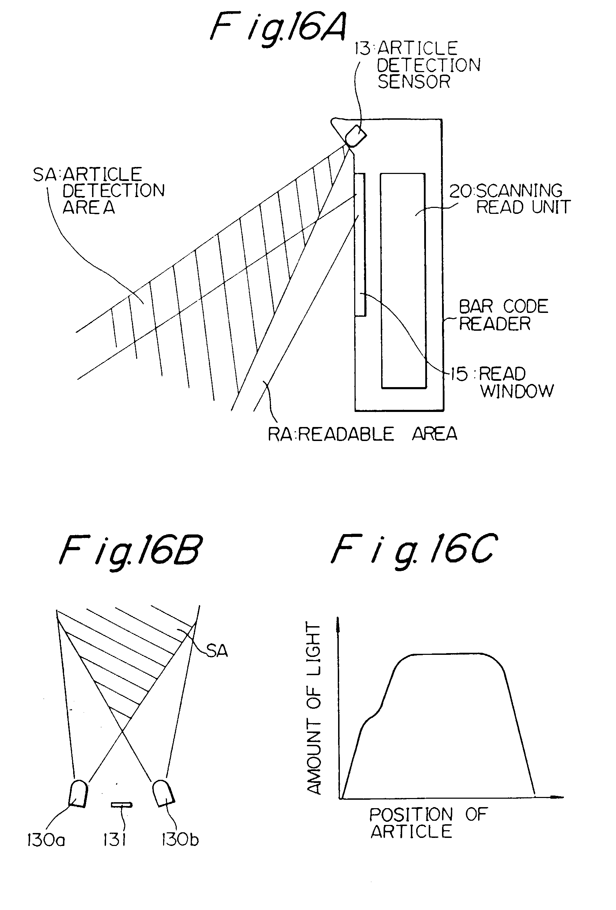

Figures 16A to 16C are views for explaining article detection method shown in Fig. 15. In Fig. 16A, SA denotes an article detection area (slant lines), and RA denotes a bar code symbol readable area. As shown in the drawing, the article detection area SA and the bar code symbol readable area RA are directed downward toward the bottom, and are provided so as to almost completely overlap. In this case, at least the article detection area SA is directed downwardly so as not to detect an operator.

In Fig. 16B, 130a and 130b denote light emission elements (for example, an LED), and 131 denotes a light reception element. The article detection area SA is formed by the slanted area overlapped by light emissions from both LEDs 130a and 130b. In Fig. 16C, the ordinate shows amount of light, and the abscissa shows the position of the article. It is possible to obtain a constant amount of light regardless of the position of the article since two light emissions overlap.

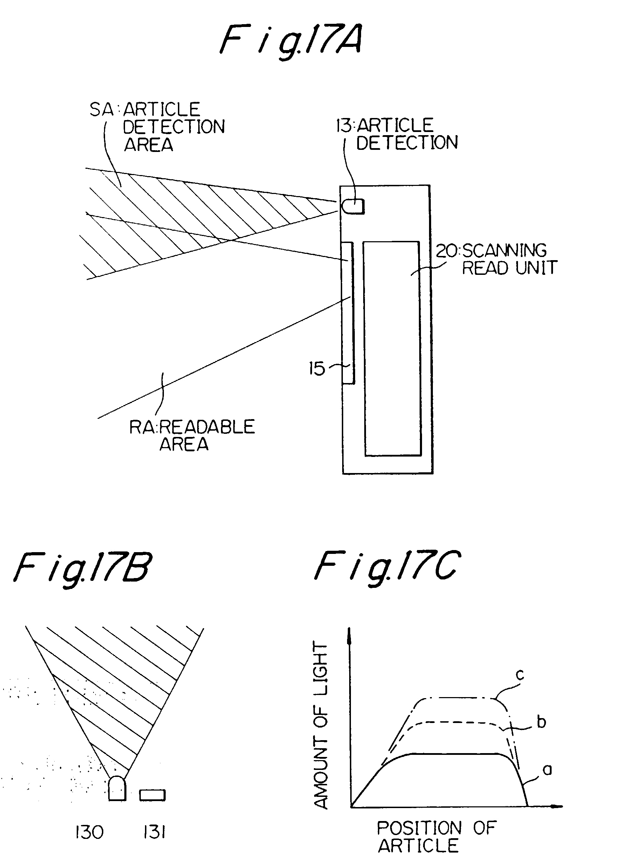

Figures 17A to 17C are views for explaining a previously considered article detection method. In Fig. 17A, the article detection area SA and the bar code symbol readable area RA are not always directed so as to overlap. In Fig. 17B, only one light emission element 130 is provided.

Accordingly, as showm by curves a, b, and c in Fig. 17C, various amounts of light appear due to the dispersion of the light output characteristics of each element.

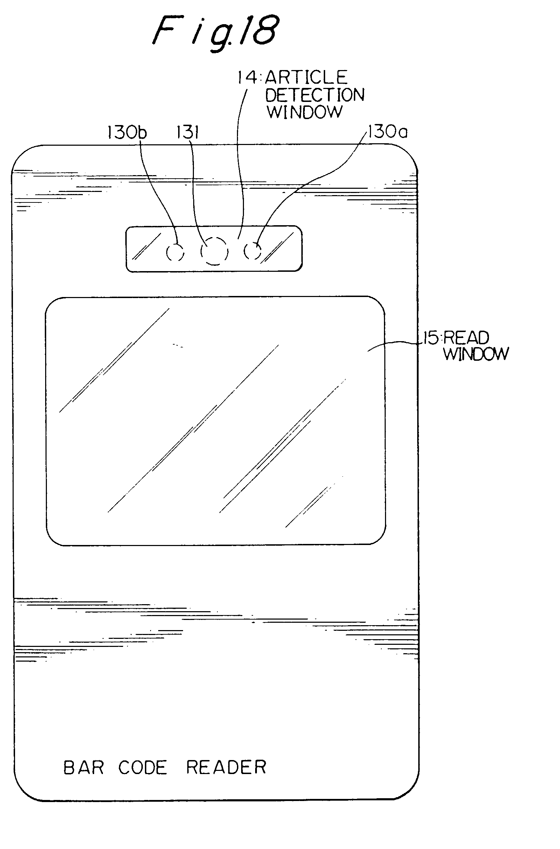

Figure 18 is a schematic elevation view of the bar code reader shown in Fig. 15. In the article detection window, two light emission elements 130a and 130b, and a light reception element are provided as shown in Fig. 16B.

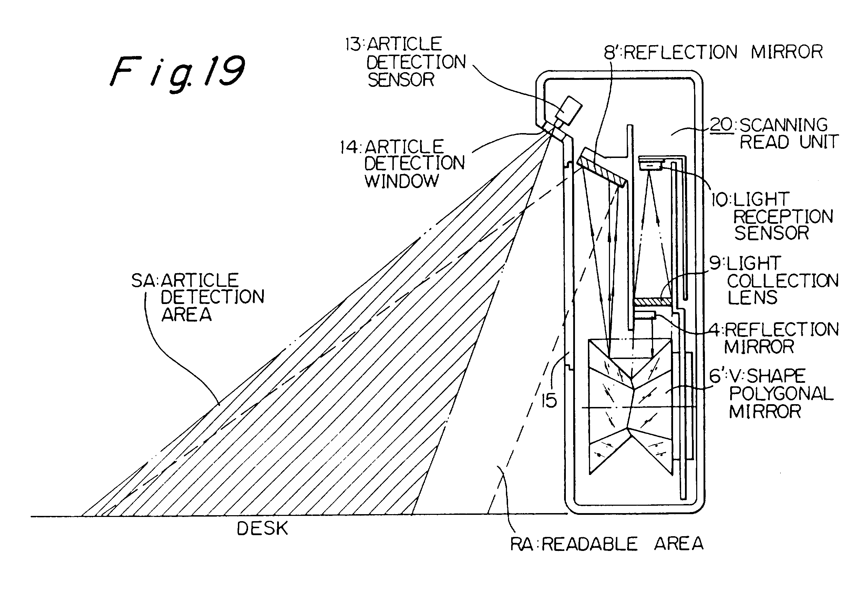

Figure 19 is a detailed view of the article detection area and the bar code symbol readable area. The article detection sensor 13 and the reflection mirror 8' are directed toward the desk or counter so that it is possible to avoid an error in reading the bar code when the operator is seated in front of the bar code reader.

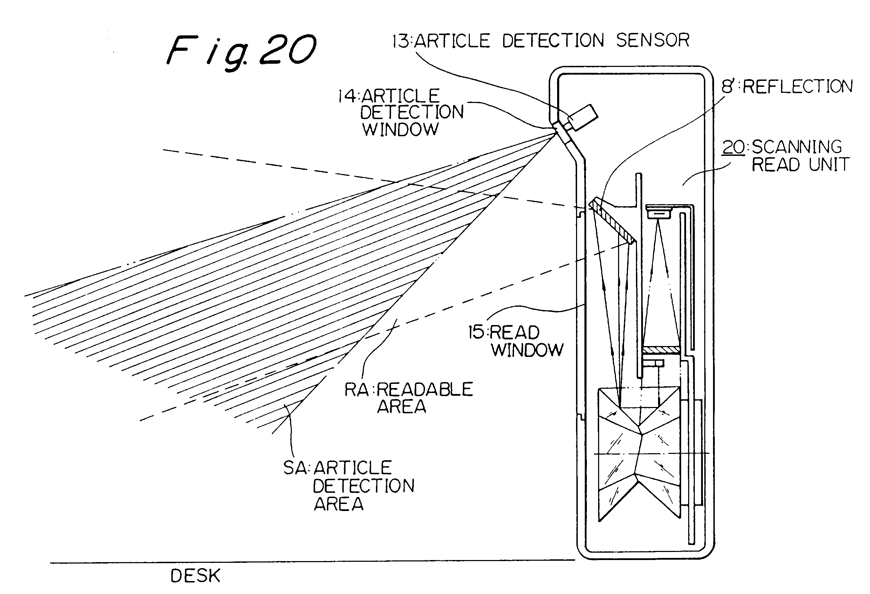

Figure 20 is a view for explaining another example of the bar code symbol readable area shown in Fig. 19. As is obvious from the drawing, the bar code symbol readable area RA is directed in a horizontal direction. In this case, the article detection area SA is directed toward the desk or counter.

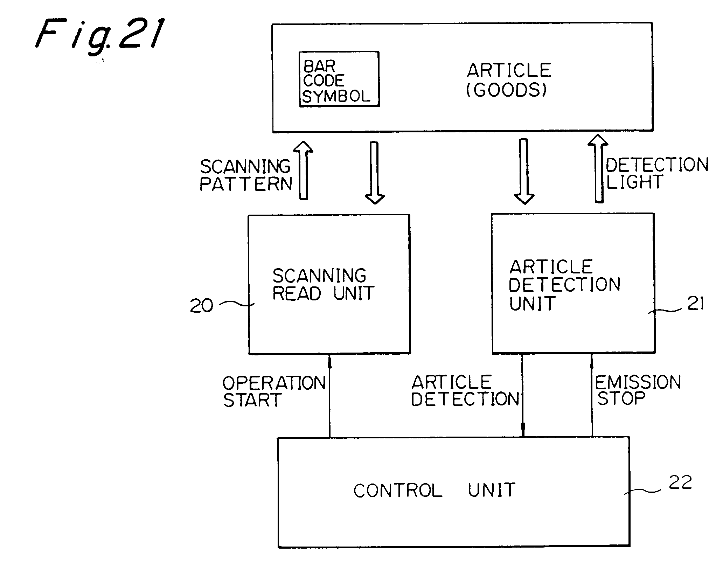

Figure 21 is a basic block diagram of the bar code reader shown in Fig. 21. In Fig. 21, reference number 20 denotes a scanning read unit for reading the bar code symbol, 21 an article detection unit for detecting the article, and 22 a control unit for controlling the operation of the units 20 and 21. That is, the control unit 22 controls the start of the scanning operation of the unit 20 in response to the detection signal of the article by means of the unit 21, and controls the stop of the detection light from the article detection unit 21 after the read operation of the bar code is started.

Accordingly, it is possible to increase the precision of the detection of the bar code since the detection light from the unit 21 is stopped during the read operation. Further, it is possible to extend the life of the laser source since the laser beam is turned on only after the article is detected.

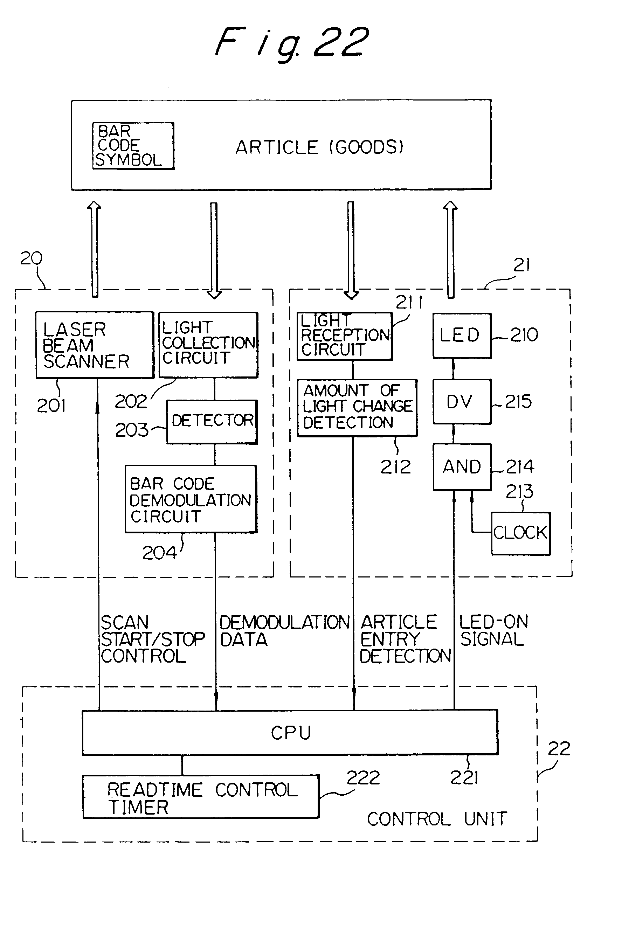

Figure 22 is a detail block diagram of the bar code reader shown in Fig. 21. The scanning read unit 20 is constituted by a laser beam scanning circuit 201, a light collection circuit 202, a detector 203, and a bar code demodulation circuit 204. The article detection unit 21 is constituted by a light emitting element (LED) 210, a light reception circuit 211, an amount of light change detection circuit 212, a clock generation circuit 212, an AND gate 214, and a drive circuit (DV) 215. Further, the control unit 22 is constituted by a central processing unit (CPU) 221 and a read time control timer 222.

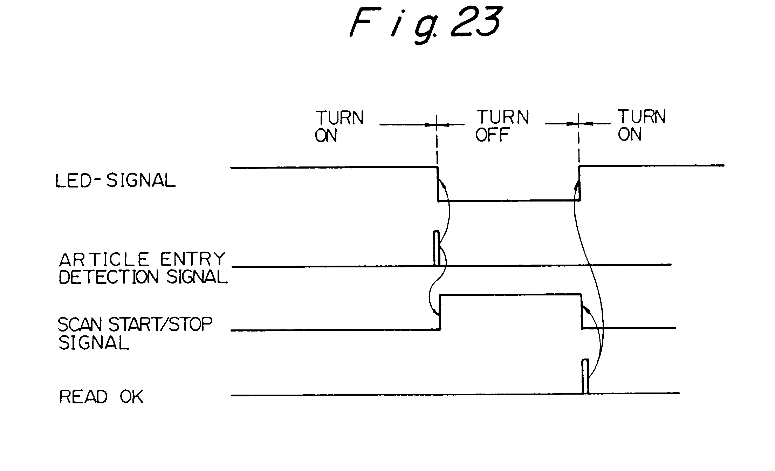

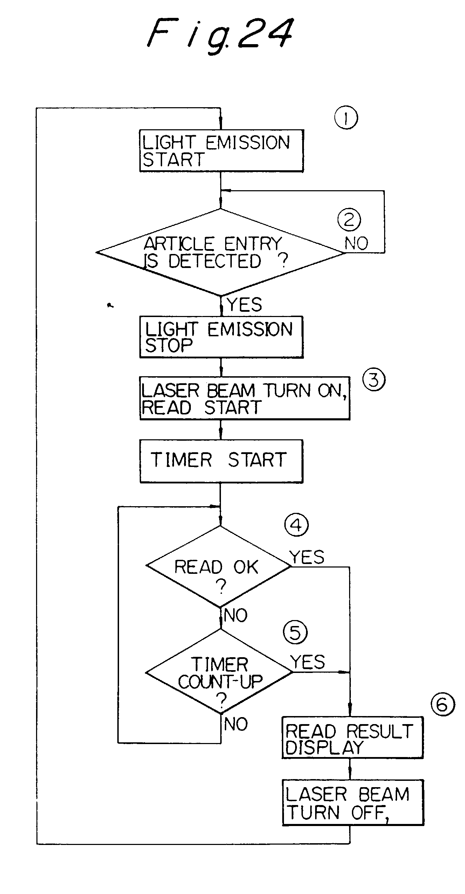

Figure 23 is a signal timing chart of the circuit shown in Fig. 22, and Figure 24 is a flowchart of the circuit 22.

As shown in Fig. 23, briefly, the control unit 22 generates the LED-ON signal to be sent to the article detection unit 21. When the article entry detection signal is returned from the article detection unit 21 to the control unit 22, the scan start signal is generated from the control unit 22 to the scanning read unit 20 and the demodulation data is returned from the scanning read unit 20 to the control unit 22. The LED is turned off during the operation of reading the bar code. Further, when the read operation is completed, the scan stop signal is generated from the control unit 22 and sent to the scanning read unit 20 and the LED is again turned on.

The above operation is explained in detail with reference to Figure 24.
① When the CPU generates the LED-ON signal and sends it to the article detection unit 21, the AND gate 214 is opened by the LED-ON signal and the clock pulse from the clock circuit 213 is transferred to the LED 215 through the drive circuit 215. As a result, a pulsed detection light is emitted from the LED 210. The pulsed turning-ON of the LED is effective to extend the life of the LED and to reduce the power consumption of the bar code reader.
② The detection circuit 212 detects the change of the amount of the light from the bar code symbol. That is, when the article enters in the detection area SA, the detection light changes in response to the change of the reflection light from the article. Accordingly, the CPU 221 detects the change of the detection light so that the turning-ON of the LED is stopped.
③ Next, the CPU 221 sends a scan start signal to the laser scanner 201, and the laser beam is irradiated onto the bar code symbol. At the same time, the control timer 222 is started to count the irradiation time. This time is determined based on the experience of the handling speed (entry speed) of the article. The reflected laser beam is collected by the circuit 202, received by the detector 203, and demodulated by the demodulation circuit 204.
④ When the CPU 221 receives the demodulation data from the demodulation circuit 204, the CPU confirms completion of the read of the bar code symbol (READ-OK).
⑤ If the reading of the bar code is not completed, the CPU 221 checks the count value of the timer 222. If the count of the timer is not completed, the process is returned to the step ④ .
⑤ When the reading of the bar code is completed, the green lamp is turned on, and the laser beam is turned off, then the LED is turned back on to detect a next article.

As the effect of this embodiment, further, it is possible to precisely detect the bar code symbol since the LED is turned off when the laser beam is irradiated onto the bar code symbol. This is because the reading of the bar code symbol is not disturbed by the irradiation of the LED.

The following explanations are given regarding the manufacturing process of the V-shape polygonal mirror according to the present invention.

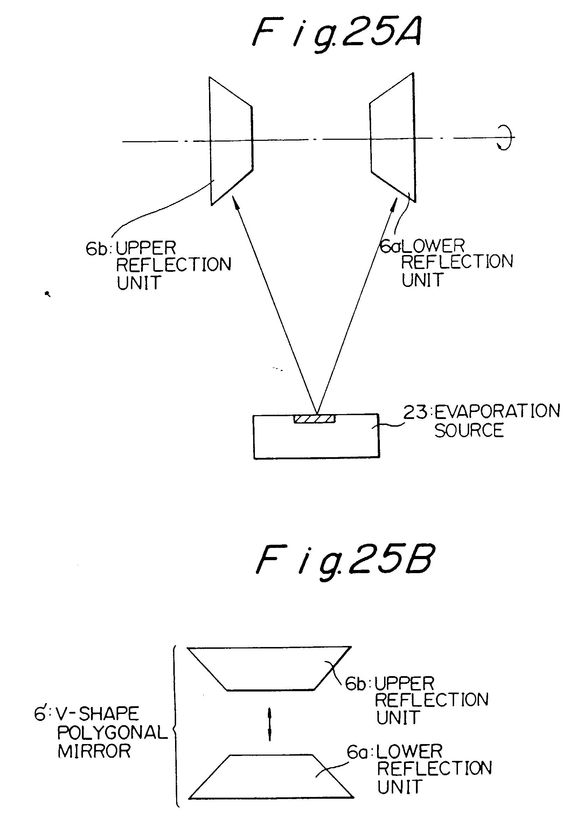

Figures 25A and 25B are views for explaining a manufacturing process of the V-shape polygonal mirror for use in embodiments of the present invention. As shown in Fig. 25A, in the manufacturing process, the V-shape polygonal mirror is divided into the lower reflection unit 6a and the upper reflection unit 6b, then, each surface is coated with a metal film evaporated from an evaporation source 23. Since each surface is separately coated by the evaporated metal film, it is possible to form a metal film having a uniform thickness over all surfaces. As shown in Fig. 25B, after coating, the lower reflection unit 6a and the upper reflection unit 6b are coupled each other to form the V-shape polygonal mirror 6'.

In a previously-considered manufacturing process, the V-shape polygonal mirror is not divided into the upper and the lower unit, but is integrally, subjected to coating by the evaporated metal film from the evaporation source. Accordingly, it is difficult to ensure uniformity of the thickness of the metal film on the surface. This is because the intersection angle between the upper unit and the lower unit is sharp so that the metal film becomes thin in the corner portion.

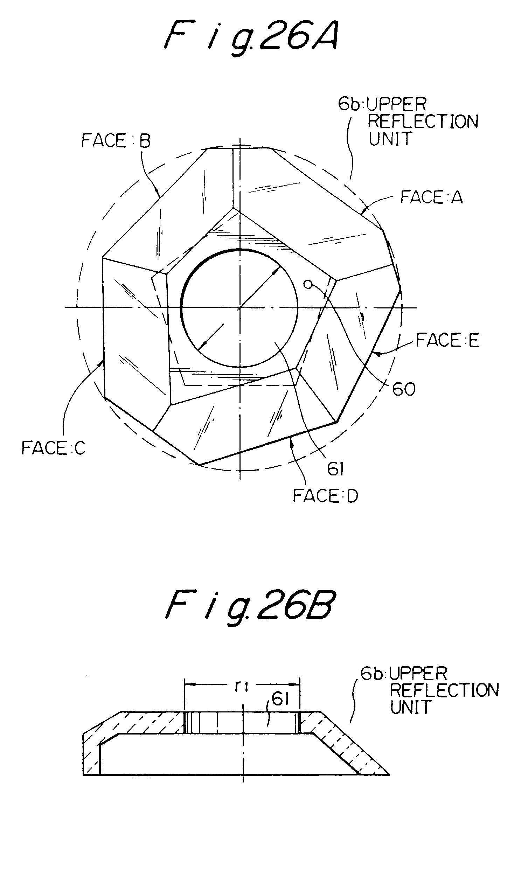

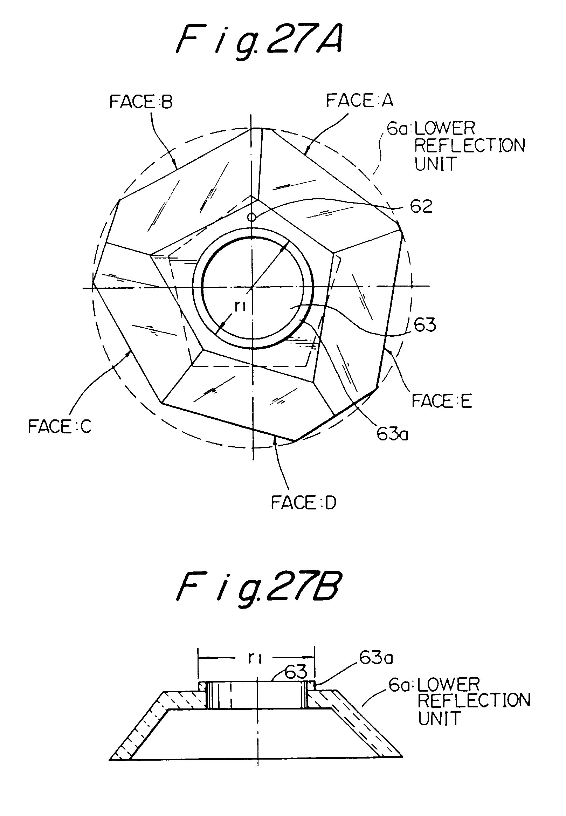

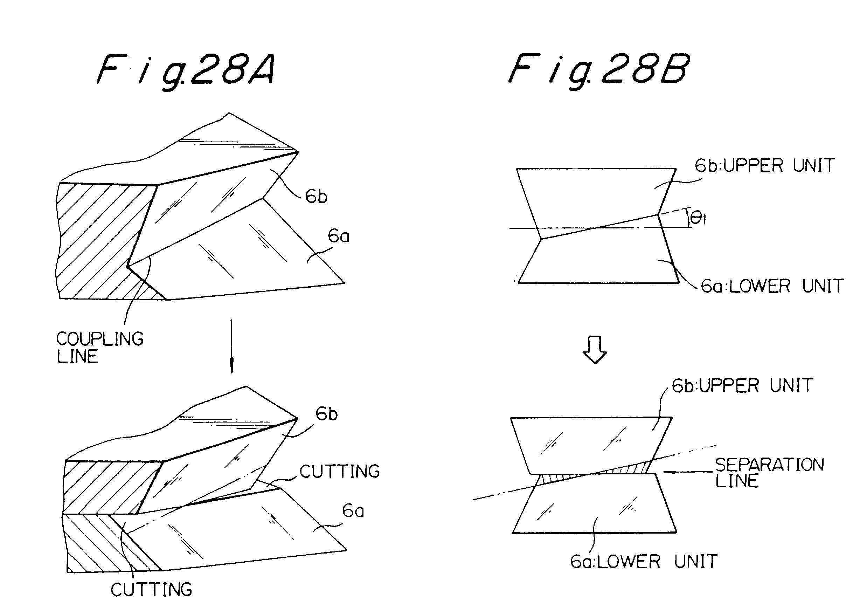

Figures 26A and 26B show the upper reflection unit, Figures 27A and 27B show the lower reflection unit, and Figures 28A and 28B are views for explaining the division method between the upper unit and the lower unit.

Each of the upper and lower reflection units is made using plastic mold. In Figs. 26A and 26B, 60 denotes a coupling pin to position the upper unit and the lower unit, and 61 denotes a coupling hole having a diameter r₁ to couple the upper unit and the lower unit. Accordingly, the coupling hole 61 is coupled to the projection 63a in Figs. 27A and 27B in the final process of the manufacture.

As shown in Fig. 28B, the upper unit 6b and the lower unit 6a are divided along the horizontal separation line to facilitate the plastic mold of the upper and the lower units. After molding, the coupling portions of the upper and the lower units are cut as shown in Fig. 28A to form the coupling line having the inclination angle θ₁.

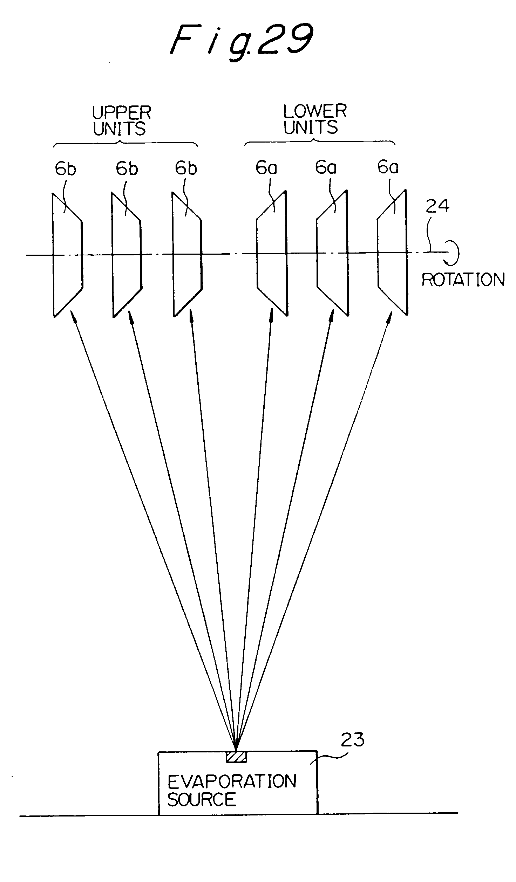

Figure 29 is a view for explaining the evaporation process. A plurality of the upper and lower units 6a and 6b are provided on support axle 24. In the evaporation process, the support axle 24 is gradually rotated so that the metal film can be uniformly coated on the surface. Further, as is obvious from the drawing, since the corner portion based on the intersection angle does not exist in each unit, it is possible to ensure a uniform thickness.

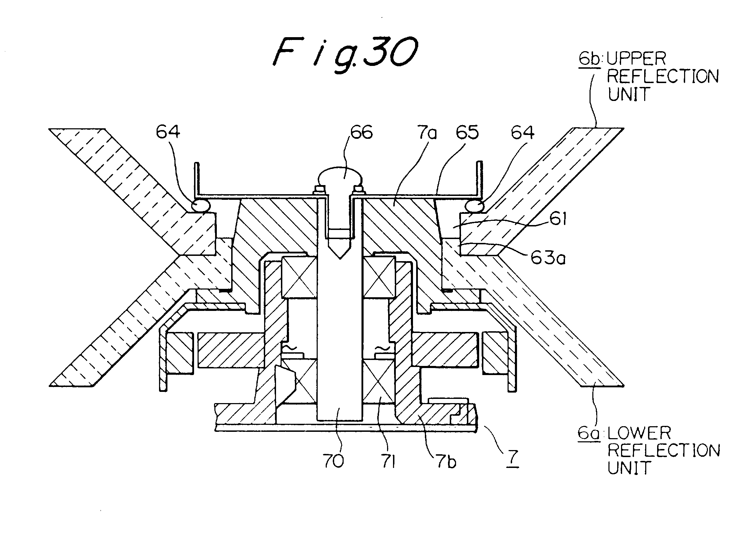

Figure 30 is a sectional view after assembly of the V-shape polygonal mirror and the polygon motor. In Fig. 30, reference number 7 denotes the polygon motor, 7a a rotor, 7b a stator, 70 a rotation axle, and 71 a bearing. Further, 64 denotes a rubber spacer, 65 a flat spring, and 66 a screw.

First, the rotation axle 70 is inserted into the stator 7b through the bearing 71. Second, the rotor 7a is mounted onto the rotation axle 70 by the screw 66. Third, the lower reflection unit 6a is mounted on to the stator 7a. Fourth, the upper reflection unit 6b is mounted onto the lower unit 6a through the hole 61 and the projection 63a. Finally, the flat spring 65 is mounted to the rotation axis 70 by the screw 66. At the same time, the rubber spacer 64 is provided between the upper unit 6b and the flat spring 65.

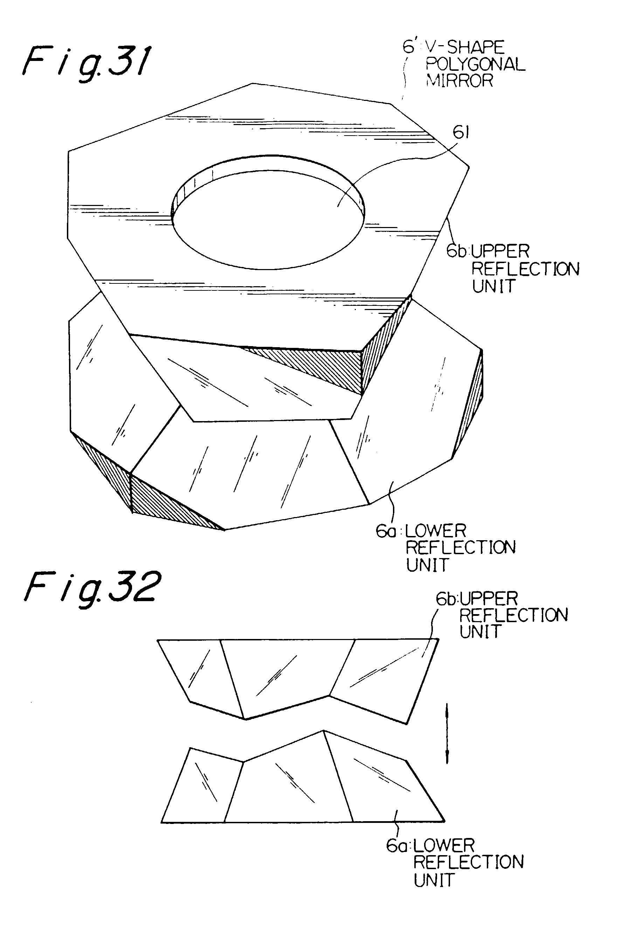

Figure 31 is a schematic perspective view of the V-shape polygonal mirror after assembly. As is obvious from the drawing, the outer configuration is deformed based on requirements of the manufacturing process, but has no influence on the scanning patterns of the laser beam.

Figure 32 is a view for explaining another example of a division method. In this example, the separation line between the upper unit and the lower unit is provided along the inclination angle θ₁. Accordingly, it is possible to ensure a large reflection area in the surfaces of the upper and the lower reflection units.

## Claims

1. A compact type bar code reader for detecting a bar code symbol provided on a surface of an article, comprising:
laser beam generation means (1) for generating an outgoing laser beam to be irradiated onto the bar code symbol;
focus means (2) for focusing the outgoing beam;
a polygonal mirror (6, 6b) for forming various scanning patterns of the outgoing beam;
a reflector means (8) for reflecting the outgoing beam to, and an incoming beam from, the bar code symbol;
light collection means (9) for collecting the incoming beam reflected from the reflector means (8);
light reception means (10) for receiving the collected incoming beam and converting it to an electric signal; and
a casing (11) for housing all of the above means an upper half of the casing having a reading window (15) for transmitting the outgoing and incoming beams, and a lower half of the casing including the laser beam generation means (1), focus means (2), light collection means (9) and light reception means (10);
wherein a light path of the outgoing beam is longer than that of the incoming beam, and the outgoing light path is uninterrupted by the light collection means (9);
characterised by V-shape reflecting means (5, 6; 6') constituted by an upper reflection unit, provided by said polygonal mirror (6, 6b), and by a lower reflection unit (5, 6a), the upper and lower reflection units being positioned in the upper and lower halves of the casing respectively, and being mutually arranged in a V-shape for transferring the outgoing and incoming beams between the lower and upper halves of the casing.

2. A compact type bar code reader as claimed in claim 1, wherein said lower reflection unit is a fixed reflection mirror (5) separate from said polygonal mirror (6).

3. A compact type bar code reader as claimed in claim 1, wherein said upper and lower reflection units (6b, 6a) are both provided in the form of a V-shape polygonal mirror (6').

4. A compact type bar code reader as claimed in claim 3, wherein the lower reflection unit (6a) and the upper reflection unit (6b) comprise a plurality of reflection surfaces, each of the upper reflection surfaces and lower reflection surfaces being intersected so as to form a V-shape having an intersection angle (θ₂), and inclined between the upper reflection surfaces and the lower reflection surfaces so as to form an inclination angle (θ₁).

5. A compact type bar code reader as claimed in claim 1, wherein said reflector means (8) is wholly arranged within the upper half of the casing.

6. A compact type bar code reader as claimed in claim 1, wherein said reflector means comprises a multi-face reflection mirror (8') constituted by at least two reflection mirrors (8a, 8b) to form various directions of the scanning pattern.

7. A compact type bar code reader as claimed in claim 1, further comprising: at least two light emission elements and a light reception element provided in the upper half of the casing, and being arranged in such a way that an article detection area defined by these elements overlaps a bar code symbol readable area defined by the outgoing laser beam.

8. A compact type bar code reader as claimed in claim 7, wherein the light emission elements are arranged in such a way that light emission areas defined by these elements overlap each other.

9. A bar code detecting system comprising a bar code reader as claimed in claim 1, in the form of a scanning read unit (20), and further comprising an article detection unit (21) for generating a detection light beam for irradiation onto the article and receiving the detection light beam reflected from the article; and a control unit (22) for generating an emission stop signal to the detection unit (21), receiving an article detection signal from the detection unit (21), and generating a scanning start/stop signal to be sent to the scanning read unit (20);
the control unit controlling the operation of these units in such a way that, first, the detection light beam is emitted to the article, second, the outgoing laser beam is started after the article detection signal is received, third, the detection light beam is stopped during irradiation of the outgoing laser beam, fourth, the outgoing laser beam is stopped when the read operation is completed, finally, the detection light beam is again emitted to detect a next article.

10. A system is claimed in claim 9, wherein the scanning read unit (20) further comprises a demodulation circuit (204) for demodulating the incoming laser beam.

11. A system as claimed in claim 9, wherein the article detection unit (21) comprises a light emission element (210), a light reception element (211), a light change detection circuit (212) for detecting the change of the amount of the received light, and a clock pulse generation circuit (213) for generating clock pulses to obtain a pulsed detection light.

12. A system as claimed in claim 9, wherein the control unit comprises a central processing unit (221) for controlling the operation of the scanning read unit (20) and detection unit (21), and a read time control timer (222) for counting the irradiation time of the laser beam.

13. A compact type bar code reader as claimed in claim 3, wherein the V-shape polygonal mirror (6') is manufactured in such a way that the V-shape polygonal mirror is divided into the upper reflection unit (6b) and the lower reflection unit (6a), each surface of the upper and lower unit is separately coated by a metal film evaporated from an evaporation source, and the upper and lower units are assembled to each other after evaporation of the metal film.

14. A compact type bar code reader as claimed in claim 3, wherein the upper and lower reflection units (6b, 6a) are divided along a horizontal separation line.

15. A compact type bar code reader as claimed in claim 3, wherein: the V-shape polygonal mirror is provided with a polygon motor (7) to rotate the V-shape polygonal mirror; the polygon motor being constituted by a rotation axle (70), a rotor (7a) fixed to the rotation axle, a stator (7b), and a bearing (71) mounted between the rotation axle and the stator; the rotor being mounted over the stator, and the upper and the lower reflection units (6b, 6a) being mounted over the rotor.

16. A compact type bar code reader as claimed in claim 15, wherein the assembly of the V-shape polygonal mirror (6') and the polygon motor are performed in such a way that first, the rotation axle (70) is mounted to the stator (7b) through the bearing (71), second, the rotor (7a) is mounted to the rotation axis (70) by a screw (66), third, the lower reflection unit is mounted onto the stator, fourth, the upper reflection unit is mounted onto the lower unit through a coupling hole (61) and a projection (63a), and finally, a flat spring (65) is mounted to the rotation axis (70) by the screw (66), and at the same time, a rubber sheet (64) is provided between the upper unit and the flat spring.

## Patentansprüche

1. Strichcodeleser vom kompakten Typ zum Erkennen eines Strichcodesymbols, welches auf einer Oberfläche eines Artikels angeordnet ist, umfassend:
Laserstrahlerzeugungsmittel (1) zum Erzeugen eines ausgehenden Laserstrahls, welcher auf das Strichcodesymbol gestrahlt wird;
Fokussiermittel (2) zum Fokussieren des ausgehenden Strahls;
einen Polygonalspiegel (6, 6b) zum Ausbilden verschiedener Scanmuster des ausgehenden Strahls;
eine Reflektoreinrichtung (8) zum Reflektieren des ausgehenden Strahls zum und eines einfallenden Strahls von dem Strichcodesymbol;
Lichtsammelmittel (9) zum Sammeln des von der Reflektoreinrichtung (8) reflektierten einfallenden Strahls;
Lichtempfangsmittel (10) zum Empfangen des gesammelten einfallenden Strahls und zum Umwandeln desselben in ein elektrisches Signal; und
ein Gehäuse (11) zum Aufnehmen aller obengenannter Einrichtungen und Mittel, wobei eine obere Hälfte des Gehäuses ein Lesefenster (15) zum Durchlassen des ausgehenden und einfallenden Strahls hat, und wobei eine untere Hälfte des Gehäuses die Laserstrahlerzeugungsmittel (1), die Fokussiermittel (2), die Lichtsammelmittel (9) und die Lichtempfangsmittel (10) einschließt;
wobei ein Lichtweg des ausgehenden Strahls länger als der des einfallenden Strahls ist, und wobei der ausgehende Lichtstrahlweg nicht von den Lichtsammelmitteln (9) unterbrochen wird;
**gekennzeichnet** durch V-förmige Reflektiermittel (5, 6; 6'), die durch eine obere, von dem Polygonalspiegel (6, 6b) dargestellte Reflexionseinheit und durch eine untere Reflexionseinheit (5, 6a) gebildet sind, wobei die obere bzw. die untere Reflexionseinheit in der oberen bzw. der unteren Hälfte des Gehäuses angeordnet sind, und wobei sie V-förmig zueinander angeordnet sind, um die ausgehenden und die einfallenden Strahlen zwischen der unteren und der oberen Hälfte des Gehäuses zu übertragen.

2. Strichcodeleser vom kompakten Typ nach Anspruch 1, bei welchem die untere Reflexionseinheit ein fester Reflexionsspiegel (5) ist, welcher von dem Polygonalspiegel (6) getrennt ist.

3. Strichcodeleser vom kompakten Typ nach Anspruch 1, bei welchem die obere und untere Reflexionseinheit (6b, 6a) beide in der Form eines V-förmigen Polygonalspiegels (6') vorgesehen sind.

4. Strichcodeleser vom kompakten Typ nach Anspruch 3, bei welchem die untere Reflexionseinheit (6a) und die obere Reflexionseinheit (6b) eine Vielzahl von Reflexionsflächen aufweisen, wobei die jeweiligen oberen Reflexionsflächen und die unteren Reflexionsflächen sich so schneiden, daß sie eine V-Form mit einem Schnittwinkel (θ₂) bilden, und eine solche Neigung zwischen den oberen Reflexionsflächen und den unteren Reflexionsflächen aufweisen, daß sie einen Neigungswinkel (θ₁) bilden.

5. Strichcodeleser vom kompakten Typ nach Anspruch 1, bei welchem die Reflektormittel (8) vollkommen innerhalb der oberen Hälfte des Gehäuses angeordnet sind.

6. Strichcodeleser vom kompakten Typ nach Anspruch 1, bei welchem die Reflektormittel einen vielflächigen Reflexionsspiegel (8') aufweisen, welcher durch wenigstens zwei Reflexionsspiegel (8a, 8b) gebildet ist, um verschiedene Richtungen des Scanmusters auszubilden.

7. Strichcodeleser vom kompakten Typ nach Anspruch 1, ferner umfassend:
wenigstens zwei Lichtemissionselemente und ein Lichtempfangselement, die in der oberen Hälfte des Gehäuses angeordnet sind, und die in einer solchen Weise angeordnet sind, daß ein durch diese Elemente definierter Artikelerkennungsbereich einen Bereich, in welchem ein Strichcodesymbol lesbar ist, überlappt, der durch den ausgehenden Laserstrahl definiert wird.

8. Strichcodeleser vom kompakten Typ nach Anspruch 7, bei welchem die Lichtemissionselemente in einer solchen Weise angeordnet sind, daß durch diese Elemente definierte Lichtemissionsbereiche einander überlappen.

9. Strichcode-Erkennungssystem, umfassend einen Strichcodeleser gemäß Anspruch 1 in der Form einer Scan-Leseeinheit (20), und ferner umfassend eine Artikelerkennungseinheit (21) zum Erzeugen eines Erkennungslichtstrahls zum Bestrahlen des Artikels und zum Empfangen des Erkennungslichtstrahls, welcher von dem Artikel reflektiert wird;
und eine Steuereinheit (22) zum Erzeugen eines Emissionsstoppsignals für die Erkennungseinheit (21), zum Empfangen eines Artikelerkennungssignals von der Erkennungseinheit (21) und zum Erzeugen eines Scan-Start/Stopp-Signals, welches zur Scan-Leseeinheit (20) gesendet werden soll;
wobei die Steuereinheit die Operation dieser Einheiten in einer solchen Weise steuert, daß zuerst der Erkennungslichtstrahl zum Artikel hin emittiert wird, als zweites der ausgehende Laserstrahl gestartet wird, nachdem das Artikelerkennungssignal empfangen wurde, als drittes der Erkennungslichtstrahl während des Strahlens des ausgehenden Laserstrahls gestoppt wird, als viertes der ausgehende Laserstrahl gestoppt wird, wenn die Leseoperation abgeschlossen ist, und zuletzt der Erkennungslichtstrahl wieder emittiert wird, um einen nächsten Artikel zu erkennen.

10. System nach Anspruch 9, bei welchem die Scan-Leseeinheit (20) ferner einen Demodulationsschaltkreis (204) zum Demodulieren des einfallenden Laserstrahls umfaßt.

11. System nach Anspruch 9, bei welchem die Artikelerkennungseinheit (21) ein Lichtemissionselement (210), ein Lichtempfangselement (211), einen Lichtänderungs-Erkennungsschaltkreis (212) zum Erkennen der Änderung der Menge des empfangenen Lichtes, und einen Zeitpuls-Erzeugungsschaltkreis (213) zum Erzeugen von Zeitpulsen aufweist, um ein gepulstes Erkennungslicht zu erhalten.

12. System nach Anspruch 9, bei welchem die Steuereinheit eine zentrale Verarbeitungseinheit (221) zum Steuern der Operation der Scan-Leseeinheit (20) und der Erkennungseinheit (21) umfaßt, und einen Lesezeit-Steuertaktgeber (222) zum Zählen der Strahlungszeit des Laserstrahls.

13. Strichcodeleser vom kompakten Typ nach Anspruch 3, bei welchem der V-förmige Polygonalspiegel (6') in einer solchen Weise hergestellt wird, daß der V-förmige Polygonalspiegel in die obere Reflexionseinheit (6b) und die untere Reflexionseinheit (6a) aufgeteilt wird, wobei jede Fläche der oberen und der unteren Einheit getrennt durch einen Metallfilm beschichtet wird, welcher von einer Aufdampfquelle aufgedampft wird, und wobei die obere und die untere Einheit nach dem Aufdampfen des Metallfilms zusammengebaut werden.

14. Strichcodeleser vom kompakten Typ nach Anspruch 3, bei welchem die obere und die untere Reflexionseinheit (6b, 6a) entlang einer horizontalen Trennlinie aufgeteilt sind.

15. Strichcodeleser vom kompakten Typ nach Anspruch 3, bei welchem der V-förmige Polygonalspiegel mit einem Polygonmotor (7) versehen ist, um den V-förmigen Polygonalspiegel zu drehen, wobei der Polygonmotor durch eine Drehachse (70), einen auf der Drehachse befestigten Rotor (7a), einen Stator (7b) und ein Lager (71) gebildet ist, welches zwischen der Drehachse und dem Stator montiert ist; wobei der Rotor über den Stator und die obere und die untere Reflexionseinheit (6b, 6a) über den Rotor montiert sind.

16. Strichcodeleser vom kompakten Typ nach Anspruch 15, bei welchem der Zusammenbau des V-förmigen Polygonalspiegels (6') und des Polygonmotors in einer solchen Weise durchgeführt wird, daß zuerst die Drehachse (70) über das Lager (71) an dem Stator (7b) montiert wird, als zweites der Rotor (7a) mittels einer Schraube (66) an der Drehachse (70) montiert wird, als drittes die untere Reflexionseinheit auf den Stator montiert wird, als viertes die obere Reflexionseinheit über ein Kupplungsloch (61) und einen Vorsprung (63a) auf die untere Einheit montiert wird, und zuletzt eine flache Feder (65) mittels der Schraube (66) an der Drehachse (70) montiert und gleichzeitig ein Gummiblatt (64) zwischen der oberen Einheit und der flachen Feder vorgesehen wird.

## Revendications

1. Lecteur de code à barres de type compact destiné à détecter un symbole de code à barres prévu sur une surface d'un article, comportant :
des moyens de génération de faisceau laser (1) destinés à générer un faisceau laser de sortie devant être irradié sur le symbole de code à barres;
des moyens de focalisation (2) destinés à focaliser le faisceau de sortie;
un miroir polygonal (6, 6b) destiné à former différents motifs de balayage sur le faisceau de sortie;
des moyens de réflexion (8) destinés à réfléchir le faisceau de sortie sur, et un faisceau d'entrée provenant du symbole de code à barres;
des moyens de collecte de lumière (9) destinés à recueillir le faisceau d'entrée provenant des moyens de réflexion (8);
des moyens de réception de lumière (10) destinés à recevoir le faisceau d'entrée collecté et le convertir en un signal électrique; et
un boîtier (11) destiné à renfermer tous les moyens ci-dessus, une moitié supérieure du boîtier ayant une fenêtre de lecture (15) afin de laisser passer les faisceaux de sortie et d'entrée, et une moitié inférieure du boîtier comprenant les moyens de génération de faisceau laser (1), les moyens de focalisation (2), les moyens de collecte de lumière (9) et les moyens de réception de lumière (10);
un passage de lumière du faisceau de sortie étant plus long que celui du faisceau d'entrée, et le passage de lumière de sortie n'étant pas interrompu par les moyens de collecte de lumière (9);
caractérisé par des moyens de réflexion en forme de V (5, 6; 6'), constitués par une unité de réflexion supérieure, procurée par ledit miroir polygonal (6, 6b), et par une unité de réflexion inférieure (5, 6a), les unités de réflexion supérieure et inférieure étant positionnées dans les moitiés supérieure et inférieure du boîtier de manière respective, et étant disposées mutuellement en forme de V afin de transférer les faisceaux de sortie et d'entrée entre les moitiés inférieure et supérieure du boîtier.

2. Lecteur de code à barres de type compact selon la revendication 1, dans lequel ladite unité de réflexion inférieure est un miroir réfléchissant fixe (5) séparé dudit miroir polygonal (6).

3. Lecteur de code à barres de type compact selon la revendication 1, dans lequel lesdites unités de réflexion supérieure et inférieure (6b, 6a) sont toutes deux prévues sous la forme d'un miroir polygonal en forme de V (6').

4. Lecteur de code à barres de type compact selon la revendication 3, dans lequel l'unité de réflexion inférieure (6a) et l'unité de réflexion supérieure (6b) comportent plusieurs surfaces réfléchissantes, chacune des surfaces réfléchissantes supérieures et des surfaces réfléchissantes inférieures se coupant de façon à former une forme de V ayant un angle d'intersection (θ2), et inclinées entre les surfaces réfléchissantes supérieures et les surfaces réfléchissantes inférieures de façon à former un angle d'inclinaison (θ1).

5. Lecteur de code à barres de type compact selon la revendication 1, dans lequel lesdits moyens de réflexion (8) sont totalement agencés dans la moitié supérieure du boîtier.

6. Lecteur de code à barres de type compact selon la revendication 1, dans lequel lesdits moyens de réflexion comportent un miroir réfléchissant multiface (8') constitué par au moins deux miroirs réfléchissants (8a, 8b) afin de former différentes directions du modèle de balayage.

7. Lecteur de code à barres de type compact selon la revendication 1, comportant en outre : au moins deux éléments d'émission de lumière et un élément de réception de lumière prévus dans la moitié supérieure du boîtier, et agencés d'une manière telle qu'une zone de détection d'articles définie par ces éléments chevauche une zone de lecture de symbole de code à barres définie par le faisceau laser de balayage.

8. Lecteur de code à barres de type compact selon la revendication 7, dans lequel les éléments d'émission de lumière sont agencés d'une manière telle que des zones d'émission de lumière définies par ces éléments se chevauchent l'une l'autre.

9. Système de détection de code à barres comportant un lecteur de code à barres selon la revendication 1, sous la forme d'une unité de lecture de balayage (20), et comportant en outre une unité de détection d'article (21) destinée à générer un faisceau de lumière de détection pour irradiation sur l'article, et à recevoir le faisceau de lumière de détection réfléchi par l'article; et une unité de commande (22) destinée à générer un signal d'arrêt d'émission vers l'unité de détection (21), à recevoir un signal de détection d'article provenant de l'unité de détection (21), et à générer un signal marche/arrêt de balayage devant être envoyé à l'unité de lecture de balayage (20);
l'unité de commande commandant le fonctionnement de ces unités d'une manière telle que, premièrement, le faisceau de lumière de détection est émis vers l'article, deuxièmement, le faisceau laser de sortie démarre une fois que le signal de détection d'article est reçu, troisièmement, le faisceau de lumière de détection est arrêté pendant l'irradiation du faisceau laser de sortie, quatrièmement, le faisceau laser de sortie est arrêté lorsque l'opération de lecture est terminée, et finalement, le faisceau de lumière de détection est à nouveau émis afin de détecter un article suivant.

10. Système selon la revendication 9, dans lequel l'unité de lecture de balayage (20) comporte en outre un circuit de démodulation (204) destiné à démoduler le faisceau laser réfléchi.

11. Système selon la revendication 9, dans lequel l'unité de détection d'article (21) comprend un élément d'émission de lumière (210), un élément de réception de lumière (211), un circuit de détection de changement de lumière (212) destiné à détecter le changement de la quantité de lumière reçue, et un circuit de génération d'impulsion d'horloge (213) destiné à générer des impulsions d'horloge afin d'obtenir une lumière de détection pulsée.

12. Système selon la revendication 9, dans lequel l'unité de commande comprend une unité centrale de traitement (221) destinée à commander le fonctionnement de l'unité de lecture à balayage (20) et de l'unité de détection (21), et un temporisateur de commande de temps de lecture (222) destiné à compter le temps d'irradiation du faisceau laser.

13. Lecteur de code à barres de type compact selon la revendication 3, dans lequel le miroir polygonal en forme de V (6') est fabriqué d'une manière telle que le miroir polygonal en forme de V est divisé en l'unité de réflexion supérieure (6b) et l'unité de réflexion inférieure (6a), chaque surface de l'unité supérieure et inférieure est revêtue séparément par un film métallique évaporé depuis une source d'évaporation, et les unités supérieure et inférieure sont assemblées l'une à l'autre après évaporation du film métallique.

14. Lecteur de code à barres de type compact selon la revendication 3, dans lequel les unités de réflexion supérieure et inférieure (6b, 6a) sont divisées le long d'une ligne de séparation horizontale.

15. Lecteur de code à barres de type compact selon la revendication 3, dans lequel : le miroir polygonal en forme de V comporte en outre un moteur de polygone (7) destiné à faire tourner le miroir polygonal en forme de V; le moteur de polygone étant constitué par un axe de rotation (70), un rotor (7a) fixé sur l'axe de rotation, un stator (7b), et un palier (71) monté entre l'axe de rotation et le stator; le rotor étant monté sur le stator, et les unités de réflexion supérieure et inférieure (6b, 6a) étant montées sur le rotor.

16. Lecteur de code à barres de type compact selon la revendication 15, dans lequel l'assemblage du miroir polygonal en forme de V (6') et du moteur de polygone est réalisé d'une manière telle que, premièrement, l'axe de rotation (70) est monté sur le stator (7b) au moyen du palier (71), deuxièmement, le rotor (7a) est monté sur l'axe de rotation (70) avec une vis (66), troisièmement, l'unité de réflexion inférieure est montée sur le stator, quatrièmement, l'unité de réflexion supérieure est montée sur l'unité inférieure au moyen d'un trou d'accouplement (61) et d'une saillie (63a), et finalement, un ressort plat (65) est monté sur l'axe de rotation (70) avec la vis (66), et dans le même temps, une feuille de caoutchouc (64) est prévue entre l'unité supérieure et le ressort plat.
